# EUROPEAN PATENT APPLICATION

(11) **EP 1 568 497 A2**
(43) Date of publication of application: **31.08.2005**
(21) Application number: 05250614.4
(22) Date of filing: 03.02.2005
(51) Int. Cl.: B41J 2/045

(54) **Method of driving inkjet printhead**

(30) Priority: 27.02.2004 KR 2004013643
(71) Applicant: SAMSUNG ELECTRONICS CO., LTD., Gyeonggi-do (KR)
(72) Inventor: Lim, Seong-taek 605-1101 Sinnamusil, Suwon-si Gyeonggi-do (KR); Kim, Jong-beom, Yongin-si Gyeonggi-do (KR); Chung, Jae-woo, Suwon-si Gyeonggi-do (KR); Lee, Kwang-ho, Seoul (KR)
(74) Representative: Greene, Simon Kenneth

(57) **Abstract**

Provided is a method of driving an inkjet printhead in which a driving pulse is applied to a piezoelectric actuator to change volume of a pressure chamber filled with ink so that an ink droplet is ejected through a nozzle (110) connected to the pressure chamber by a change in pressure according to a change in the pressure of the pressure chamber, in which the volume of the droplet ejected through the nozzle is changed by constantly maintaining a rising time (T_{R}) of the driving pulse and adjusting a duration time (T_{D}) of a maximum voltage (V_{P}) of the driving pulse.

## Description

The present invention relates to a method of driving an inkjet printhead, and more particularly, to a method of driving an inkjet printhead using a driving waveform capable of representing gradation.

In general, inkjet printheads eject fine droplets of ink for printing at desired positions on a recording medium to print an image of a predetermined color. The inkjet print heads can be classified into two types according to the mechanism of ejecting an ink droplet. One is a bubble jet type inkjet printhead which generates a bubble in the ink using a heat source to eject an ink droplet by an expansion force of the bubble. The other one is a piezoelectric type inkjet printhead which ejects an ink droplet by pressure applied to the ink by the deformation of a piezoelectric body.

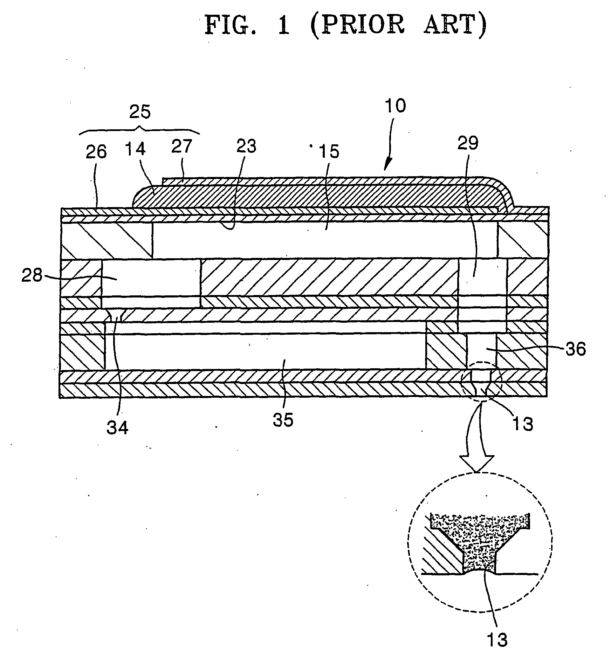

FIG. 1 illustrates a structure of a conventional piezoelectric type inkjet printhead which is disclosed in U.S. Patent No. 6,290,315.

Referring to FIG. 1, an inkjet printhead 10 includes a pressure chamber 15 filled with ink to be ejected. Ink supply paths 28 and 34 are connected to one side of the pressure chamber 15 through which ink is supplied from an ink reservoir 35 to the pressure chamber 15. Ink discharge paths 29 and 36 are connected to the other side of the pressure chamber 15. A nozzle 13 for ejecting the ink is formed at an end portion of the ink discharge paths 29 and 36. A vibration plate 23 is provided in the upper portion of the pressure chamber 15. A piezoelectric actuator 25 for providing a driving force to eject the ink by vibrating the vibration plate 23 to change the volume of the pressure chamber 15 is provided on the vibration plate 23. The piezoelectric actuator 25 includes a common electrode 26 formed on the vibration plate 23, a piezoelectric film 14 formed of a piezoelectric material on the common electrode 26, and a driving electrode 27 formed on the piezoelectric film 14 and applying a driving voltage to the piezoelectric film 14.

In the piezoelectric type inkjet printhead 10 configured as above, when a driving pulse having a predetermined driving voltage is applied to the piezoelectric film 14 through the driving electrode 27, the vibration plate 23 is bent by the deformation of the piezoelectric film 14 so that the volume of the pressure chamber 15 decreases. Accordingly, as the pressure in the pressure chamber 15 increases, the ink in the pressure chamber 15 is ejected outside through the nozzle 13. Then, when the driving pulse applied to the piezoelectric film 14 is removed, the vibration plate 23 is restored to the original shape and the volume of the pressure chamber 15 increases. Accordingly, as the pressure in the pressure chamber 15 decreases, the ink is absorbed from the ink reservoir 35 through the ink supply paths 34 and 28 so that the pressure chamber 15 is filled with the ink.

The above-described piezoelectric type inkjet printhead is advantageous in representing gradation because it can eject ink droplets having a variety of volumes through the nozzle 13 having a uniform diameter according to the waveform of the driving pulse applied to the piezoelectric actuator 25.

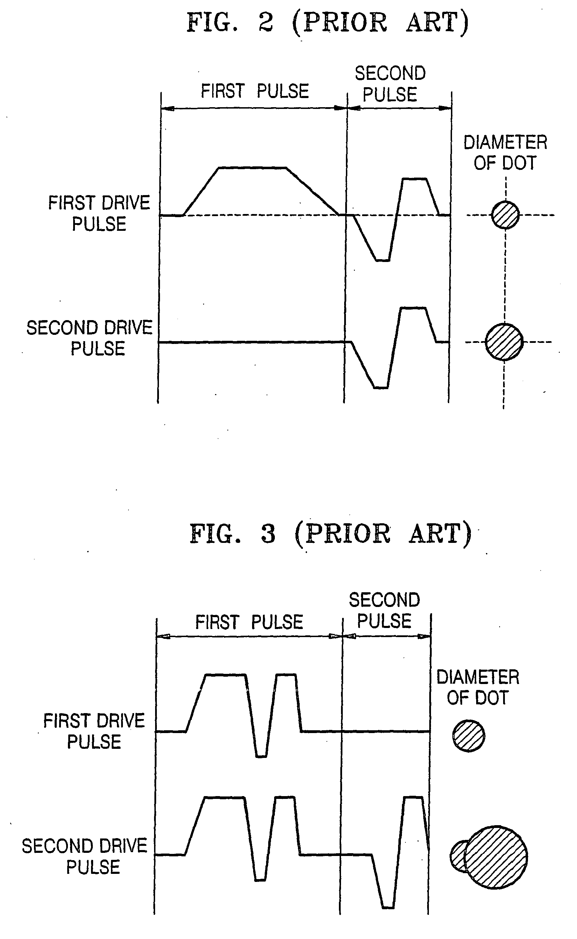

FIG. 2 illustrates driving waveforms adopted to the conventional method of driving inkjet printhead disclosed in U.S. Patent No. 6,290,315.

The driving pulses shown in FIG. 2 has waveforms to adjust the volume of a droplet in two steps. In detail, a first driving pulse to eject a droplet having a relatively smaller volume includes a first pulse and a second pulse while a second driving pulse to eject a droplet having a relatively larger volume includes only a second pulse. The second pulse is a main pulse providing a driving force to eject the ink droplet while the first pulse is an auxiliary pulse which cannot eject the ink droplet.

When the first pulse is first applied to the piezoelectric actuator 25 prior to the application of the second pulse, the vibration plate 23 slightly vibrates by the first pulse before the droplet is ejected so that the meniscus of the ink in the nozzle 13 retreats. When the second pulse for ejecting the droplet is applied at the point when the meniscus of the ink retreats, the volume of the droplet is reduced and accordingly the diameter of a dot printed on the recording medium decreases. When the second driving pulse having the second pulse only is applied to the piezoelectric actuator 25, since a droplet having a relatively smaller volume is ejected, the diameter of a dot printed on the recording medium increases.

However, in the above driving method, adjusting accurate timing of the retreat of the meniscus of the ink is difficult. The speed when a smaller droplet is ejected is slower than that when a larger droplet is ejected. Accordingly, the position of the dot on the recording medium is changed so that the quality of print is deteriorated.

FIG. 3 illustrates driving waveforms adopted to the conventional method of driving inkjet printhead disclosed in U.S. Patent No. 6,331,040.

According to the driving waveform shown in FIG. 3, by selectively applying a first pulse to eject a droplet having a small volume and a second pulse to eject a droplet having a large volume, droplets having three different volumes can be ejected. In detail, when a first driving pulse having the first pulse only is applied to the piezoelectric actuator 25, a droplet having a small volume is ejected so that a dot having a small diameter is printed on the recording medium. Although not shown, when the second pulse only is applied to the piezoelectric actuator 25, a droplet having a large volume is ejected so that a dot having a large diameter is printed on the recording medium. When a second driving pulse having both the first and second pulses is applied to the piezoelectric actuator 25, a droplet having a small volumes is ejected in advance and a droplet having a large volume is ejected to overlap the droplet having a small volume, so that a dot having the largest diameter is printed on the recording medium.

According to the above driving method although there is a difference in the speed of the ejection of the droplet having a relatively larger volume and that of the droplet having a relatively smaller volume, since the slow speed of the droplet having a smaller volume can be compensated for by applying the first pulse to eject the smaller droplet prior to the second pulse to eject the larger droplet, the two droplets can be located at the same position on the recording medium.

However, in the above driving method, it is a drawback that the ejection timing control is not easy with respect to two droplets having different ejection speeds. Furthermore, when two droplets are overlapped each other to print a dot having the largest diameter on the recording medium, it is difficult for the printed dot to have a perfect circle and the diameter of the dot is not proportional to the volumes of the ejected droplet.

According to the present invention, there is provided a method of driving an inkjet printhead in which a driving pulse is applied to a piezoelectric actuator to change volume of a pressure chamber filled with ink so that an ink droplet is ejected through a nozzle connected to the pressure chamber by a change in pressure according to a change in the pressure of the pressure chamber, wherein the volume of the droplet ejected through the nozzle is changed by constantly maintaining a rising time of the driving pulse and adjusting a duration time of a maximum voltage of the driving pulse.

The duration time of the maximum voltage of the driving pulse preferably increases as the volume of the droplet to be ejected increases.

The duration time of the maximum voltage of the driving pulse is preferably terminated before a maximum displacement of the piezoelectric actuator is reached. The duration time of the maximum voltage of the driving pulse is preferably adjusted within a range of 3-9 µs.

Preferably a falling time of the driving pulse is constantly maintained.

The maximum voltage of the driving pulse is preferably adjusted with the duration time of the maximum voltage of the driving pulse.

The maximum voltage of the driving pulse is preferably decreased as a driving frequency of the inkjet printhead increases.

The present invention thus provides a method of driving an inkjet printhead capable of adjusting the volume of a droplet for the representation of gradation while reducing a change in the speed of the ejection of the droplet.

The above and other features and advantages of the present invention will become more apparent by describing in detail preferred embodiments thereof with reference to the attached drawings in which:
FIG. 1 is a cross-sectional view illustrating an example of a conventional piezoelectric type inkjet printhead;
FIG. 2 is a view illustrating an example of a driving waveform used for the printhead of FIG. 1;
FIG. 3 is a view illustrating another example of a driving waveform used for the printhead;
FIG. 4 is a view illustrating a waveform of a driving pulse used for a method of driving an inkjet printhead according to a first embodiment of the present invention;
FIGS. 5 and 6 are graphs showing results of tests on ink droplet ejection performance of a printhead according to the method of FIG. 4;
FIGS. 7A and 7B are cross-sectional views for explaining a phenomenon in which the volume of an ink droplet decreases as a driving frequency increases, in the method of FIG. 4;
FIG. 8 is a view illustrating a waveform of a driving pulse used for a method of driving an inkjet printhead according to a second embodiment of the present invention;
FIG. 9 is a cross-sectional view illustrating that, although a driving frequency increases, the volume of the ink droplet is constantly maintained in the method of FIG. 8; and
FIG. 10 is a graph showing results of tests on ink droplet ejection performance of a printhead according to the method of FIG. 8.

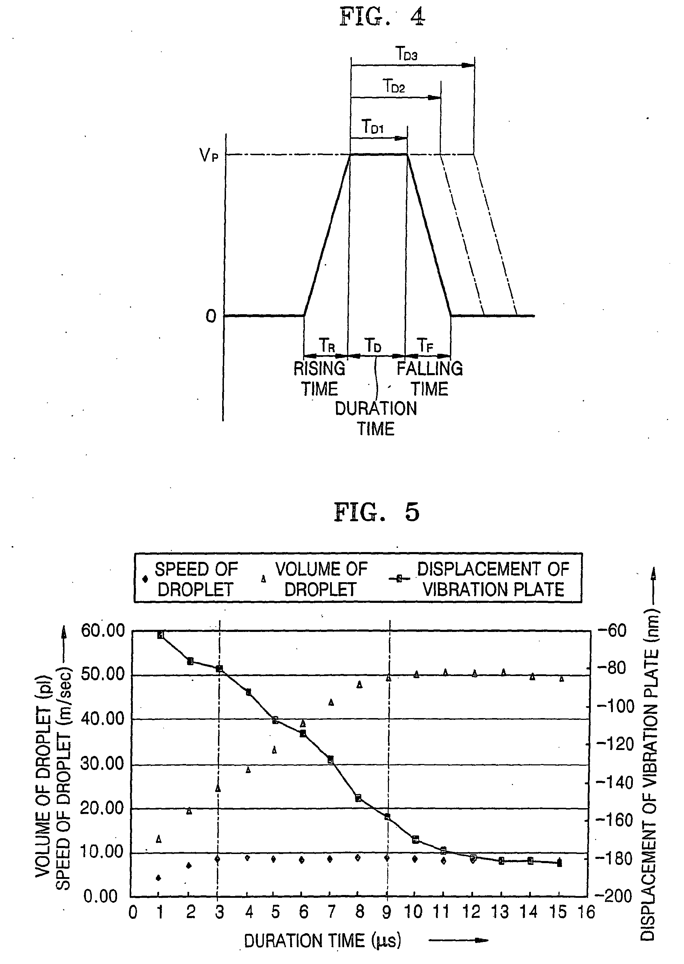

Referring to FIG. 4, in a method of driving an inkjet printhead according to an embodiment of the present invention, a driving pulse applied to a piezoelectric actuator for ejecting an ink droplet is a trapezoidal waveform. The overall time of the driving pulse having the trapezoidal waveform consists of a rising time T_{R} during which a voltage increases, a duration time T_{D} during which the maximum voltage V_{P}, that is, a driving voltage, is constantly maintained, and a falling time T_{F} during which the voltage decreases.

In a first embodiment of the present invention, by maintaining the rising time T_{P} of the driving pulse constantly and adjusting the duration time T_{P} of the maximum voltage V_{P}, the volume of a droplet ejected through a nozzle is adjusted. Accordingly, the volume of the droplet ejected through the nozzle can be variously changed according to the adjustment of the duration time T_{P} of the maximum voltage V_{P} and simultaneously the speed at which the droplet is ejected can be relatively constantly maintained by the rising time T_{R} which is constantly maintained. The falling time T_{F} of the driving pulse can be constantly maintained.

In detail, when a driving pulse is applied to the piezoelectric actuator in a state in which a pressure chamber is filled with ink, a displacement response of a vibration plate deformed by the piezoelectric actuator is determined by structural strength of the piezoelectric actuator, damping by viscosity of the ink, and inertia of the entire system including the piezoelectric actuator and the ink in an ink path. Typically, when a driving pulse having a waveform by which the maximum voltage V_{P} is reached by the rising time T_{R} such as a µs is applied to the piezoelectric actuator, the maximum displacement of the vibration plate is obtained after several times longer than the rising time T_{R} due to a delay in response influenced by the inertia and the viscosity. Thus, when the duration time T_{D} of the maximum voltage V_{P} is terminated before the maximum displacement of the vibration plate is reached, and the voltage is dropped to 0 V, the amount of the maximum displacement of the vibration plate increases proportional to the duration time T_{D} of the maximum voltage V_{P}. Thus, when the duration time T_{D} of the maximum voltage V_{P} of the driving pulse is increased from T_{D1} to T_{D2} and T_{D3}, the volume of the droplet that is ejected increases accordingly.

The speed of the ejection of the droplet is influenced by the speed of the displacement of the vibration plate rather than by the maximum displacement amount and the speed of the displacement of the vibration plate increases as the rising time T_{R} decreases. Thus, when the rising time T_{R} is constantly maintained, even when the volume of the droplet that is ejected changes, the speed of the ejection of the droplet is almost constantly maintained.

As a result, according to the present invention, the adjustment of the volume of the droplet for representing gradation is made easy and, since the positions of dots printed on a recording medium are uniform, superior print quality can be obtained.

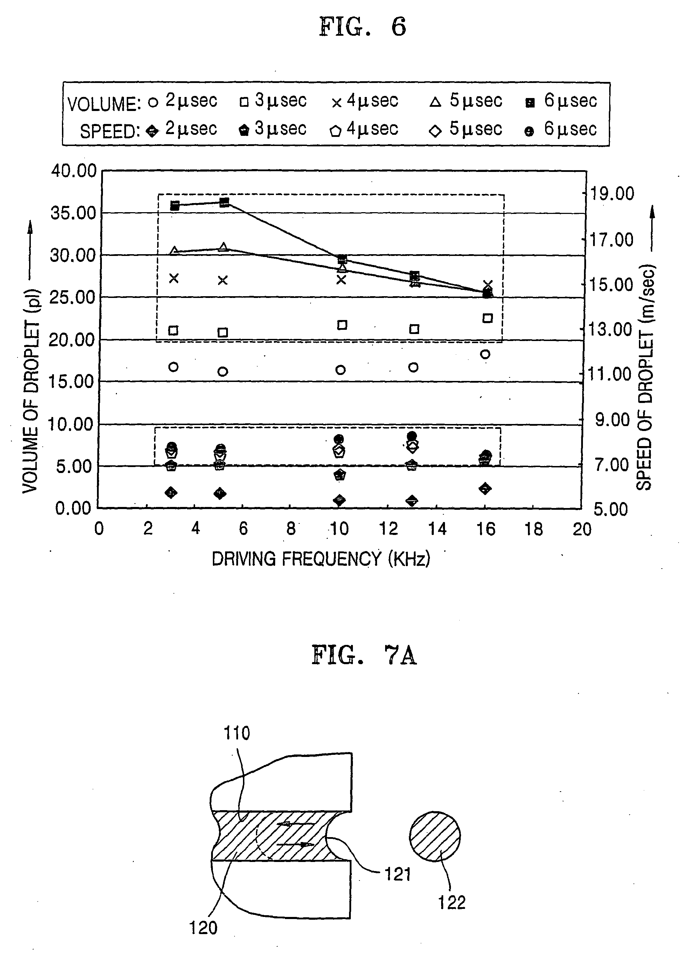

FIGS. 5 and 6 are graphs showing results of tests on ink droplet ejection performance of a printhead according to the method of FIG. 4.

First, the graph of FIG. 5 shows results of the measurement of the displacement of the vibration plate, the volume of the ink droplet that is ejected, and the speed of the ejection of the ink droplet when the rising time T_{R} and the falling time T_{F} of the driving pulse applied to the piezoelectric actuator are fixed to 1 µs and the duration time T_{D} of the maximum voltage V_{P} is increased in units of 1 µs.

As the duration time T_{D} of the maximum voltage V_{P} of the driving pulse increases, it can be seen that the displacement of the vibration plate increases gradually and the maximum displacement of the vibration plate is reached when the duration time T_{D} is 12 µs. also, the volume of the droplet gradually increases as the duration time T_{D} increases. In particular, the volume of the droplet increases in almost proportional to the duration time T_{D} until the duration time T_{D} reaches 9 µs.

Also, it can be seen that the speed of the droplet is hardly changed even when the duration time T_{D} changes and the volume of the droplet increases. In particular, the speed of the droplet is almost constantly maintained when the duration time T_{D} is not less than 3 µs.

To summarize the above results; it can be seen that, while the speed of the ejection of the droplet is almost constantly maintained, the volume of the droplet can be almost proportionally increased by adjusting the duration time T_{D} of the maximum voltage V_{P} of the driving pulse within a range of 3-9 µs. The volume of the droplet can be adjusted very effectively within a range of 20-50 pℓ.

The graph of FIG. 6 shows results of the measurement of the volume of the ink droplet that is ejected through the nozzle and the speed of the ejection of the ink droplet when the driving frequency is changed, that is, when the rising time T_{R} and the falling time T_{F} of the driving pulse applied to the piezoelectric actuator are fixed to 1 µs and the duration time T_{D} of the maximum voltage V_{P} is increased from 2 µs to 6 µs in units of 1 µs.

In the graph of FIG. 6, it can be seen that the results are the almost same as those of the graph of FIG. 5. In particular, the speed of the droplet is almost constantly maintained even when the driving frequency is increased. The volume of the droplet is uniformly maintained until 25 pℓ. However, when the droplet having a volume greater than 25 pℓ, for example, 30 pℓ, is ejected, a phenomenon occurs in which the volume of the droplet decreases as the driving frequency increases for the same duration time T_{D} of the maximum voltage V_{P}. Thus, the volume of the ink droplet cannot be efficiently changed only by the adjustment of the duration time T_{D} of the maximum voltage V_{P} at a relatively high driving frequency, for example, 10 kHz or more.

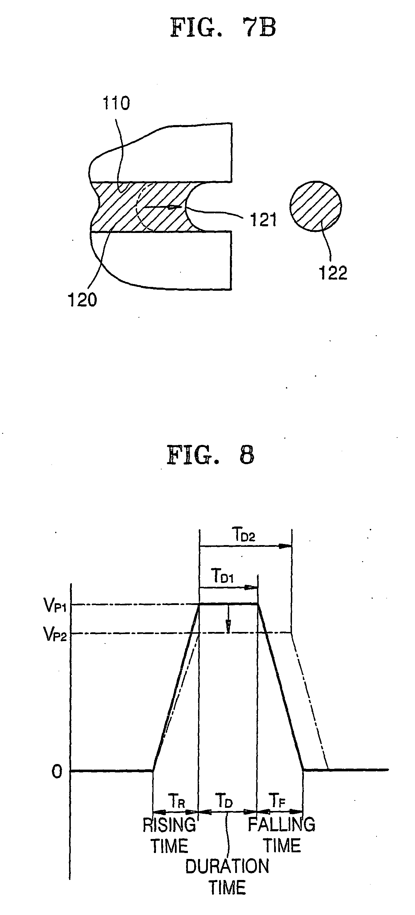

FIGS. 7A and 7B are cross-sectional views for explaining a phenomenon in which the volume of an ink droplet decreases as a driving frequency increases, in the method of FIG. 4.

Referring to FIG. 7A, when the driving frequency is relatively low, even when a droplet 122 having a large volume of about 30 pℓ is ejected, ink 120 in the nozzle 110 can be completely refilled after the ejection of the droplet 122 and the meniscus 121 of the ink 120 reaches an end portion of the nozzle 110 so as to be returned to the original state. Thus, a droplet having a desired volume can be continuously ejected.

However, as shown in FIG. 7B, when the driving frequency is relatively high, for example, 10 kHz or more, the time after the droplet 122 having a large volume of about 30 pℓ is ejected and before the next droplet is ejected is very short. Thus, in the state in which the refill of the ink 120 in the nozzle 110 is not completed and the meniscus 121 does not reach the end portion of the nozzle 110, the next droplet is ejected. In this case, it is a problem that the volume of the ejected droplet decreases.

Accordingly, the present invention provides a driving method by which the volume of the droplet in a high frequency range is not smaller than that in a low frequency range.

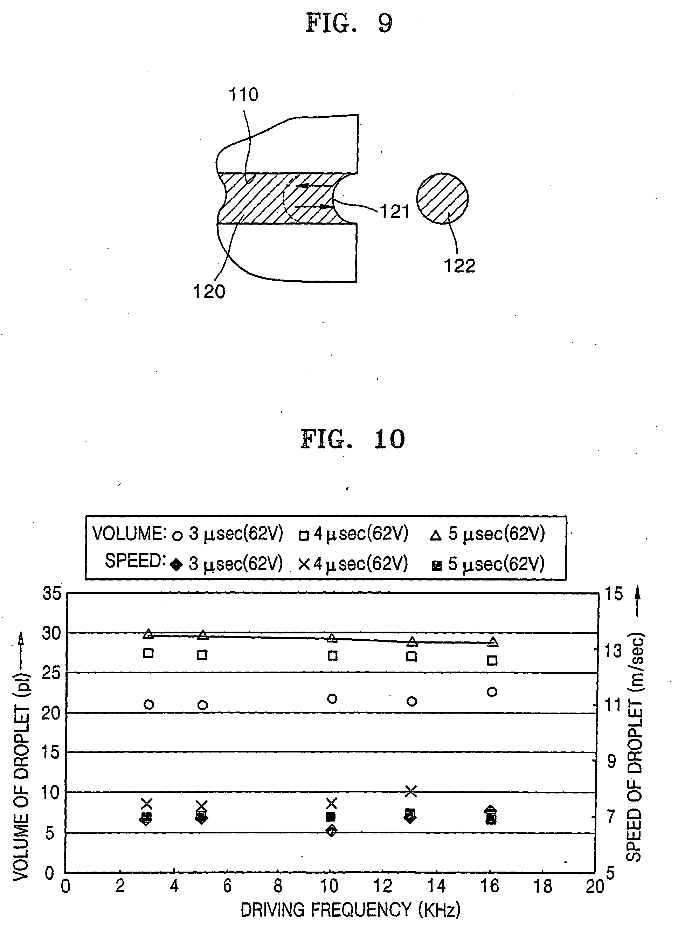

FIG. 8 is a view illustrating a waveform of a driving pulse used for a method of driving an inkjet printhead according to a second embodiment of the present invention. FIG. 9 is a cross-sectional view illustrating that, although a driving frequency increases, the volume of the ink droplet is constantly maintained in the method of FIG. 8.

Referring to FIG. 8, in the second embodiment of the present invention, in a state in which the rising time T_{R} of the driving pulse applied to the piezoelectric actuator is constantly maintained, the duration time T_{D} of the maximum voltage V_{P} and the maximum voltage V_{P} are adjusted together. Then, not only the volume of the droplet can be changed variously while the speed of the ejection of the droplet is relatively constantly maintained, but also the volume of the droplet in the high frequency range does not decrease compared to that in the low frequency range by the adjustment of the maximum voltage V_{P}.

In detail, when the driving frequency is relatively high, for example, 10 kHz or more, as the duration time T_{D} of the driving pulse applied to the piezoelectric actuator is increased from T_{D1} to T_{D2}, the maximum voltage is slightly lowered from V_{P1} to V_{P2}. Then, as shown in FIG. 9, a degree of the meniscus 121 retreating decreases in the process in which the droplet 122 is returned to the original position after being ejected. Accordingly, since the time for the meniscus 121 of the ink 120 to reach the end portion of the nozzle 110 is reduced, the refill of the ink 120 in the nozzle can be completely performed before the next droplet is ejected. That is, since the ejection of the next droplet occurs in the state in which the refill of the ink 120 in the nozzle 110 is completely performed even at a high driving frequency, the volume of the droplet 122 is not decreased.

FIG. 10 is a graph showing results of tests on ink droplet ejection performance of a printhead according to the method of FIG. 8. The graph of FIG. 10 shows results of the measurement of the volume of the ink droplet that is ejected through the nozzle and the speed of the ejection of the ink droplet when the driving frequency is changed, that is, when the rising time T_{R} and the falling time T_{F} of the driving pulse applied to the piezoelectric actuator are fixed to 1 µs and the duration time T_{D} of the maximum voltage V_{P} is increased from 3 µs to 5 µs in units of 1 µs. In particular, the graph of FIG. 10 shows the result of a test in which the maximum voltage V_{P} is decreased from 62 V to 58 V.

In the graph of FIG. 10, it can be seen that the results are the almost same as those of the graph of FIG. 6. In particular, when the droplet having a volume greater than 25 pℓ is ejected, if the maximum voltage V_{P} is decreased from 62 V to 58 V, it can be seen that the volume of the droplet is almost constantly maintained not only in a low frequency range but also in a high frequency range. Thus, the volume of the ink droplet can be effectively controlled by adjusting both duration time T_{D} and the maximum voltage V_{P} of the driving pulse at a relatively high driving frequency, for example, a driving frequency of 10 kHz or more.

As described above, according to the method of driving an inkjet printhead according to the present invention, by constantly maintaining the rising time of the driving pulse and adjusting the duration time, droplets having various volumes can be ejected and the speed of the ejection of the droplet can be relatively constantly maintained.

Also, when the duration time and the driving voltage of the driving pulse are adjusted together, since the volume of the droplet is relatively constantly maintained even when the driving frequency increases, the volume of the droplet can be easily changed by adjusting the duration time of the driving pulse in the high frequency area. Thus, since the volume of the droplet for representation of gradation is easily adjusted and the speed of the ejection of the droplet can be relatively constantly maintained, the quality of print can be improved.

While this invention has been particularly shown and described with reference to preferred embodiments thereof, it will be understood by those skilled in the art that various changes in form and details may be made therein without departing from the scope of the invention as defined by the appended claims.

## Claims

1. A method of driving an inkjet printhead in which a driving pulse is applied to a piezoelectric actuator to change volume of a pressure chamber filled with ink so that an ink droplet is ejected through a nozzle connected to the pressure chamber by a change in pressure according to a change in the pressure of the pressure chamber, wherein the volume of the droplet ejected through the nozzle is changed by constantly maintaining a rising time of the driving pulse and adjusting a duration time of a maximum voltage of the driving pulse.

2. The method of claim 1, wherein the duration time of the maximum voltage of the driving pulse increases as the volume of the droplet to be ejected increases.

3. The method of claim 1 or 2, wherein the duration time of the maximum voltage of the driving pulse is terminated before a maximum displacement of the piezoelectric actuator is reached.

4. The method of any preceding claim, wherein the duration time of the maximum voltage of the driving pulse is adjusted within a range of 3-9 µs.

5. The method of any preceding claim, wherein a falling time of the driving pulse is constantly maintained.

6. The method of any preceding claim, wherein the maximum voltage of the driving pulse is adjusted with the duration time of the maximum voltage of the driving pulse.

7. The method of claim 6, wherein the maximum voltage of the driving pulse is decreased as a driving frequency of the inkjet printhead increases.
